# EUROPEAN PATENT SPECIFICATION

(11) **EP 0 545 721 B1**
(45) Date of publication and mention of the grant of the patent: **17.12.1997**
(21) Application number: 92311070.4
(22) Date of filing: 04.12.1992
(51) Int. Cl.: G02B 23/12

(54) **Night vision arrangement**
Nachtsichtanordnung
Dispositif de vision nocturne

(30) Priority: 10.12.1991 US 805187; 06.12.1991 US 804111
(43) Date of publication of application: 09.06.1993
(73) Proprietor: LITTON SYSTEMS, INC., Beverly Hills, CA 89210 (US)
(72) Inventor: Dor, Amotz, Haifa, 34602 (IL)
(74) Representative: Godsill, John Kenneth

(56) References cited:
- NL-A- 7 600 975
- US-A- 4 449 787

## Description

The present invention relates to a night vision system.

Night vision systems are commonly used by military and law enforcement personnel for conducting operations in low light or night conditions. Night vision systems are also used to assist pilots of helicopters or airplanes in flying at night. Such night vision systems either take the form of binoculars, having separate eyepieces for each eye, or monoculars, having only a single eyepiece.

A night vision system intensifies the ambient light to produce an image. These systems require some residual light, such as moon or starlight, in which to operate. The ambient light is intensified by the night vision scope to produce an output image which is visible to the human eye. The present generation of night vision scopes utilize image intensification technologies to intensify the low level of visible light and also make visible the light from the infra-red (IR) spectrum. The image intensification process involves conversion of the received ambient light into electron patterns and projection of the electron patterns onto a phosphor screen for conversion of the electron patterns into light visible to the observer. This visible light is then viewed by the operator through a lens provided in the eyepiece of the system.

The typical night vision system has an optics portion and a control portion. The optics portion comprises lenses for focusing on the desired target, and an image intensifier tube. The image intensifier tube performs the image intensification process described above. The control portion comprises the electronic circuitry necessary for controlling and powering the optical portion of the night vision system. Although technologically advanced, all of the prior art systems fail to meet one or more of the human factors requirements of the typical operator.

For example, the typical control portions take up considerable space in comparison to the optical portion. To be most effective, a night vision system must be small, rugged and lightweight. While binocular systems have the advantage of allowing the operator to determine depth of field, binocular systems are often bulkier and heavier. Although monocular systems are smaller, the control portions are often as large as the optical portion. This makes the device cumbersome to manipulate.

Monocular systems are additionally advantageous since it is often desirable for the operator to have a single eye not coupled to the night vision system, or "free". This free eye can remain adapted to the darkness, so that if the night vision system is disengaged the operator will not be temporarily blinded as his iris dilates to adapt for the night conditions. The operator may also wish to keep one eye free in order to aim a weapon, since it is also common for weapons to be equipped with an eyepiece for sighting purposes. These eyepieces frequently utilize a night vision system as well. An operator may utilize a monocular system with a first eye, in conjunction with a night vision system equipped on a weapon for use by the other eye. Thus, monocular systems are frequently preferred over binocular systems.

It is common for operators to use a night vision system as a pocketscope. When not in use, the pocketscope can be conveniently stowed in a pocket or backpack, or can be attached to a lanyard and hung from the operator's neck. When needed, the operator would hold the pocketscope up to his eye to observe the night environment. To be most effective, a pocketscope must be small, lightweight and easy to manipulate.

If an operator desires hands free operation, binocular and monocular systems are frequently mounted to a mask worn on the operator's face. The typical face mask mounting assembly comprises a bar or rod having a plurality of cushion plates attached thereto. The bar would partially encircle the operator's face, and the cushion plates would press against specific points on the face, such as the cheeks and the forehead. The bar is held to the face by use of a strap which wraps around the head and connects to the bar at two places. At the forehead portion of the bar, a mount is provided which would attach to the binocular or monocular system. As discussed below, this mounting method has significant disadvantages.

If the operator is wearing a monocular system, it is often necessary to switch the monocular from eye to eye. To accommodate this, face masks may utilize a pair of mounting points, or a pivoting system in which the monocular is pivoted from the left eye position to the right eye position. A significant problem with this configuration is that it would be time consuming to move the monocular from one eye to the next. The monocular would need to be readjusted in the new position to accommodate the precise position of the operator's eye. While the time required to make the configuration change and adjustment may be slight, it could mean the difference between life and death of an operator.

Israeli Patent No. 77754 discloses a face mask having a horizontal bar mounted to the front of the face mask above the operator's eyes, to which a night vision monocular is attached. A locking screw holds the monocular in a position on the bar. The operator slides the monocular along the bar to move it from proximity with one eye to the second eye. This presents a problem to the operator, since each time the position of the monocular is changed, the operator must carefully calibrate the new position with his eye to effectively use the monocular.

Another problem with face mask mounting is that the adjustments of the mask could be altered by the wearing of a helmet. If an operator intends to wear a standard ballistic helmet, the mask must be first adjusted to the operator's face prior to putting the helmet on. The operator adjusts the mask for alignment of the scope with the eyes and tightens the mask so that it remains in the adjusted position. When the helmet is put on the operator's head, the bulk and weight of the helmet frequently interferes with the upper portion of the face mask. This forces the mask downward relative the operator's face knocking the monocular or binocular out of alignment with the operator's eyes. The operator must then readjust the mask to accommodate the weight and bulk of the helmet. Alternatively, the operator can readjust the helmet so that it rides higher on the head, and does not interfere with the mask. However, this usage of the helmet is dangerous for the operator, since it removes the temples, forehead and back of the head from protection by the helmet.

GB-A-1511982 discloses a monocular system which can be mounted on headgear and which has an optical portion which can adopt alternative positions in front of respective eyes. This is an example of the scheme mentioned above in which the optical portion is pivotally mounted for that purpose. A pin on the headgear engages an aperture of the monocular system to mount the system to the headgear.

According to a first aspect of the invention there is provided a night vision arrangement comprising a monocular optical portion for receiving and intensifying an image and first and second mount means, the first and second mount means being orientated so that they can be selectively engaged by a mounting member to provide two alternative positions for the optical portion in front of respective ones of an operator's eyes.

According to a second aspect of the invention there is provided a night vision arrangement comprising an optical portion for receiving and intensifying an image, supporting means on which the optical portion can be releasably mounted, a mounting member attached to one of the optical portion and the supporting means, and first and second mount means on the other of the optical portion and the supporting means, the first and second mount means being orientated so that they can be selectively engaged by the mounting member to provide two alternative positions for the optical portion in front of respective ones of an operator's eyes.

A preferred embodiment has an illuminator means for momentarily illuminating the field of view of the optical means with infra-red light, and a switch spring biased to the "off" position for energizing the illuminator means whereby the illuminator means may not be inadvertently energized for prolonged periods of time.

Preferably, said illuminator means comprises an infra-red emitting diode mounted on a forward surface of said housing, said diode capable of projecting a cone of infra-red light into an area corresponding with said field of view and said spring biased switch is mounted on said housing and is electrically connected to said diode to energize said diode only by the intentional manipulation of said switch against its bias, said switch returning to a position de-energizing said diode upon release of said switch.

Preferably there is provided an indicator means for indicating to the operator that said diode is energized.

Preferably said indicator means comprises a light-emitting diode (LED) on an interior portion of said optical portion.

Preferably there is provided a second LED which is illuminated when electrical power has dropped below a minimum amount, the LEDs being visible to said operator when looking through said field of view.

Preferably said first LED is illuminated when said infra-red emitting diode is energized and said second LED is illuminated when said electrical power has dropped below said minimum amount.

Preferably the or at least one of the LED's is mounted on an interior portion of the optical portion with flexible mylar tape.

Preferably there is provided a means for shutting off electrical power to said system upon removal of said monocular from engagement with said carriage.

It will thus be apparent that embodiments of the present invention may provide a human factor designed night vision system which can be easily manipulated by an operator as a pocketscope for hand held operations.

Embodiments may also provide a night vision monocular which can be rapidly changed from one eye to the next.

Embodiments may also provide a night vision system with an IR illuminating capability which can be utilized in a burst mode of operation.

Embodiments may also provide a night vision system with an indicating capability to inform the operator that the IR illuminating system is in use.

Embodiments may also provide a night vision system with an indicating capability to inform the operator that the internal battery is running low.

Preferably, a night vision monocular of one embodiment comprises an optical portion having an objective lens, an eyepiece, and an image intensification tube for intensifying a received image intermediate the objective lens and the eyepiece, a control housing affixed to the optical portion and having internal circuitry for powering the optical portion, and an apparatus for selectively mounting the monocular in either of two operational positions corresponding to a desired one of an operator's eyes and being rapidly switchable between the operational positions. More specifically, the selective mounting apparatus comprises a first dovetail mounting plate affixed to a first surface of the control housing, and a second dovetail mounting plate affixed to a second surface of the control housing, and a carriage configured to receive and secure a selected one of the dovetail plates, the carriage being selectively adjustable to vary the distance between the operator and the eyepiece.

Preferably, the monocular comprises an illuminating device for momentarily illuminating the field of view of the optical potion with infra-red light.

Preferably, the night vision monocular comprises an indicating device for indicating to the operator that the illuminating device is energized.

Preferably the night vision system comprises an indicating device for indicating to the operator that the internal battery is running low.

Preferably, the monocular comprises a mechanism for adjusting the azimuth of the monocular relative the operator's eye.

The night vision monocular may be secured to a frame conforming to the shape of the visor of a standard ballistic helmet, as commonly used by United States Armed Forces. The frame is affixed to the helmet by use of a plurality of adjustable cushions each having a retaining portion pivoting from the frame and engaging the visor, an adjustable strap having a left and right portion attaching to the frame at left and right attachment points respectively and a rear portion joining to the left and right portions relative to the top of the helmet, and a hook provided at the end of the rear portion to engage the back of the helmet.

The night vision monocular may be provided with double quick release mounts and a single receiving member to engage either of the double mounts. The receiving member is provided on external support, comprising either a helmet or a face mask. The receiving member has a shape corresponding to the dove tail plates, and a selective locking mechanism to secure the plates with the member.

For a better understanding of the invention and to show how the same may be carried into effect, reference will now be made, by way of example, to the accompanying drawings, wherein:
Fig. 1 shows a perspective view of a night vision monocular system according to an embodiment of the present invention;
Fig. 2 shows a top view of the night vision monocular system of Fig. 1;

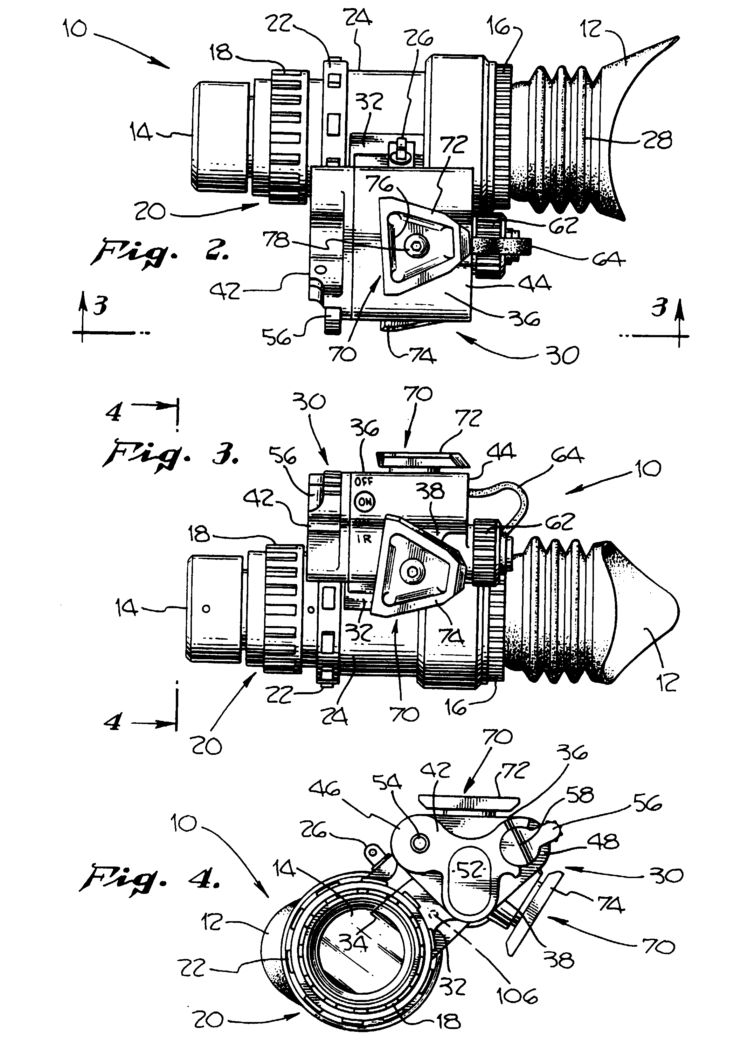

Fig. 3 shows a side view of the night vision monocular system of Fig. 1;
Fig. 4 shows a front view of the night vision monocular system of Fig. 1;
Fig. 5 shows a perspective view of the night vision monocular system of Fig. 1 in association with a helmet mount assembly, for use with an operator's right eye;
Fig. 6 shows a side view of the helmet mount assembly of Fig. 5;
Fig. 7 shows the night vision monocular system in association with the helmet mount assembly of Fig. 5, for use with an operator's left eye;
Fig. 8 shows a top view of the helmet mount assembly of Fig. 5;
Fig. 9 shows a bottom view of the dovetail carriage for use on the helmet mount assembly of Fig. 5;
Fig. 10 shows the interior of the dovetail carriage as taken through the section 10-10 of Fig. 8;
Fig. 11 shows the interior of the dovetail carriage as taken through the section 11-11 of Fig. 10;
Fig. 12 shows a partial cutaway view of the night vision monocular system of Fig. 1;
Fig. 13 shows a sectional view of a retainer cushion of the helmet mount assembly as taken through the section 13-13 of Fig. 8;
Fig. 14 shows a sectional view of the dovetail mounting plate as taken through the section 14-14 of Fig. 1;
Fig. 15 shows a sectional view of the dovetail mounting plate as taken through the section 15-15 of Fig. 14;
Fig. 16 shows another sectional view of the dovetail mounting plate as taken through the section 15-15 of Fig. 14;
Fig. 17 shows a front view of the night vision monocular system of Fig. 1 in association with a face mask assembly; and
Fig. 18 shows a partial side view of the night vision monocular system of Fig. 1 affixed to the face mask assembly.

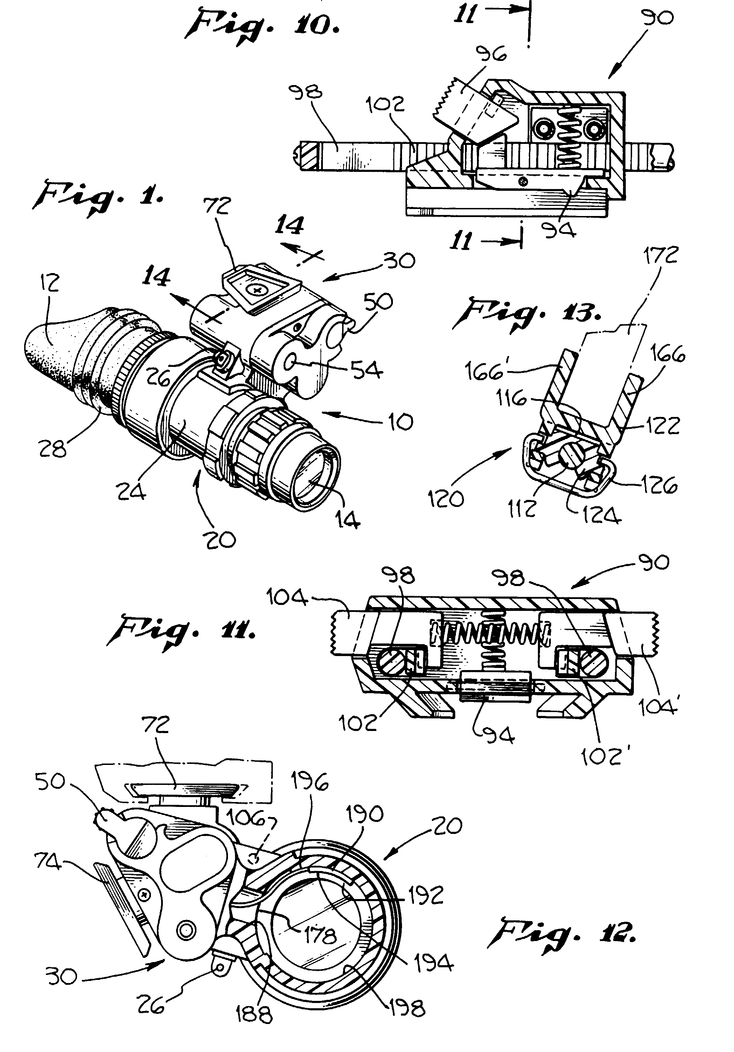

Law enforcement and military forces operating during conditions of near or total darkness have a critical need for lightweight, rugged, and human factors-designed, night vision systems. Referring first to Fig. 1, there is shown a night vision monocular 10. The monocular 10 has an optics portion, shown generally at 20, and a control housing, shown generally at 30. As will be further described below, the control housing contains the circuitry necessary for powering and controlling the optics portion.

The optics portion 20 is generally cylindrical in shape, and comprises an eyepiece 12, an objective lens 14, and an intermediate sleeve portion 24. The eyepiece 12 is shaped to fit against the operator's face, providing a darkened shroud around the operator's eye. The eyepiece 12 also has a flexible bellows 28, which allows the eyepiece to be selectively manipulated so as to perfectly fit any particular operator. At the other end of optics portion 20, objective lens 14 is provided. As will be further described below, an image intensification tube is provided inside sleeve 24, between eyepiece 12 and objective lens 14.

In operation, ambient light enters objective lens 14, passes through the image intensification tube, and then forms an image which is seen by the operator through the eyepiece 12. The operator can make adjustments to the image observed by adjusting objective focus ring 18 and eyepiece focus ring 16. As is well known in the art, the adjustment of these focus rings bring the image into focus.

The optics portion 20 has a collar mount ring 22 with internal threads. The collar mount ring 22 can be unscrewed by the operator to remove objective lens 14 and open optics portion 20. This additionally allows replacement of the image intensification tube. In normal operations, the operator would not open the optics portion 20, but rather it should remain sealed to prevent the introduction of contaminants into the optics portion 20. It is anticipated that a variety of different power objective lenses be adaptable to be screwed onto optics portion 20, giving greater flexibility to the operator.

The optics portion 20 is powered and controlled through circuitry provided inside control housing 30. Control housing 30 is generally triangular in shape, and is form-fit to be easily grasped by an operator. Control housing 30 attaches to optics portion 20 by the use of attachment flange 32 which mounts flush to sleeve 24. An access tunnel 188 is provided within attachment flange 32 and connects to an opening 178 in sleeve 24 as best seen in the cutaway view of Fig. 12. This tunnel 188 provides a passageway between the optics portion and the control housing for electrical wiring. Lanyard ring 26 is also disposed on attachment flange 32, corresponding to a point equivalent to the center of gravity of night vision scope 10. It is anticipated that an operator utilize a lanyard which would attach to ring 26, so that the night vision monocular 10 can hang from the operator's neck when not in use.

The control housing 30 is formed from three generally cylindrical portions, including first cylindrical portion 46, second cylindrical portion 48, and third cylindrical portion 52. Within these cylindrical portions are chambers that house the internal circuitry and battery. These cylindrical portions also allow the three sides of control housing 30 to have rounded edges. It should be readily apparent that these rounded edges make the device more aesthetically pleasing and easier to hold than would otherwise be achieved with a more rectangular-shaped control housing. As will be further described below, the use of individual cylindrical chambers allows the device to be effectively sealed, so as to keep out moisture, dirt, or other contaminants.

Surrounding the three cylindrical portions are facing surface 34, first mounting surface 36, and second mounting surface 38. Facing surface 34 is positioned most adjacent to optics portion 20 and has attachment flange 32 extending from it. Both first mounting surface 36 and second mounting surface 38 are substantially flat and provide an attachment point for the dovetail mount, shown generally at 70. The ends of control housing 30 are framed by forward surface 42 and rearward surface 44. The forward end of third cylindrical portion 52 features rotary switch 50. Rotary switch 50 is substantially flush within switch cavity 58 and has a thumb knob 56 which extends outwardly from the side of third cylindrical portion 52. Infra-red (IR) emitting diode 54 is provided on forward surface 42, and is substantially centered in an end of first cylindrical portion 46. The use of rotary switch 50 allows the operator to turn on night vision monocular 10 and control IR emitting diode 54, as will be further described below.

Second cylindrical portion 48 is intended to hold a single replaceable battery which provides power for the night vision monocular 10. Battery cap 62 is provided on rearward surface 44, and retaining strap 64 attaches the center of battery cap 62 to a portion of control housing 30. The operator replaces the internal battery by unscrewing battery cap 62, exposing an internal battery chamber. It is anticipated that battery cap 62 provide a water tight seal to prevent moisture from entering and possibly contaminating the battery chamber.

It is further anticipated that first cylindrical portion 46 and third cylindrical portion 52 comprise sealed chambers which are independent from second cylindrical portion 48. A gas purge valve 106, as shown by phantom lines in Fig. 4, provides an input point for the entry of nitrogen gas under pressure. The flow of nitrogen gas forces out air which can cause oxidation of the internal electrical components. It is intended that this gas purge process be performed only by maintenance personnel, and not by the operator.

The sleeve portion 24 and control housing 30 are machined or molded from a lightweight metallic material, such as polycarbonate. The surfaces are then provided with a black oxide finish coating, providing a non-light reflective and easy to grasp surface which is common to military hardware.

It is anticipated that the operator use the night vision system 10 as a convenient pocketscope. As such, the operator can simply grasp the night vision system using control housing 30 as a convenient handle and hold the system up to the operator's eye to view the night environment through eye piece 12. Since the device is very lightweight and compact, it can be readily stowed in one of the operator's pockets or backpack. The pocketscope can also be used in conjunction with a lanyard, as substantially described above. The operator can replace the objective lens 14 with one of greater power, such as three times (3X) power, to use the pocketscope in reconnaissance.

It is also anticipated that the operator would occasionally need to keep his hands free to perform other tasks. For these occasions, a mechanism is provided which enables the monocular 10 to be securely fastened in place. Thus, monocular 10 can either be attached to a face mask, as common in the art, or could be used in conjunction with a helmet mount or weapon mount, which will be further disclosed below. Each of these types of mounts utilize a dovetail mounting carriage which can mate with the dual dovetail mounts 70 and 70' provided on control housing 30.

In embodiments of the present invention, two dovetail mounts 70 are provided, a first one on first mounting surface 36 and a second one on second mounting surface 38. Since the characteristics of both dovetail mounts are identical, only the dovetail mount 70 provided on first mounting surface 36 will be described hereinbelow. It should be apparent that the following description applies equally well to the dovetail mount 70 provided on second mounting surface 38. The dovetail mount 70 has a dovetail plate 72 which is generally trapezoidal in shape. First edge 82 and second edge 84 converge in the direction of the operator's face. The edges 82 and 84 are generally bevelled so as to engage a carriage provided with either the face mask or helmet mount, which will both be described below. An intermediate portion of dovetail plate 72 has depression 76, providing an area for mounting screw 78. Mounting screw 78 snugly secures dovetail plate 72 to first mounting surface 36.

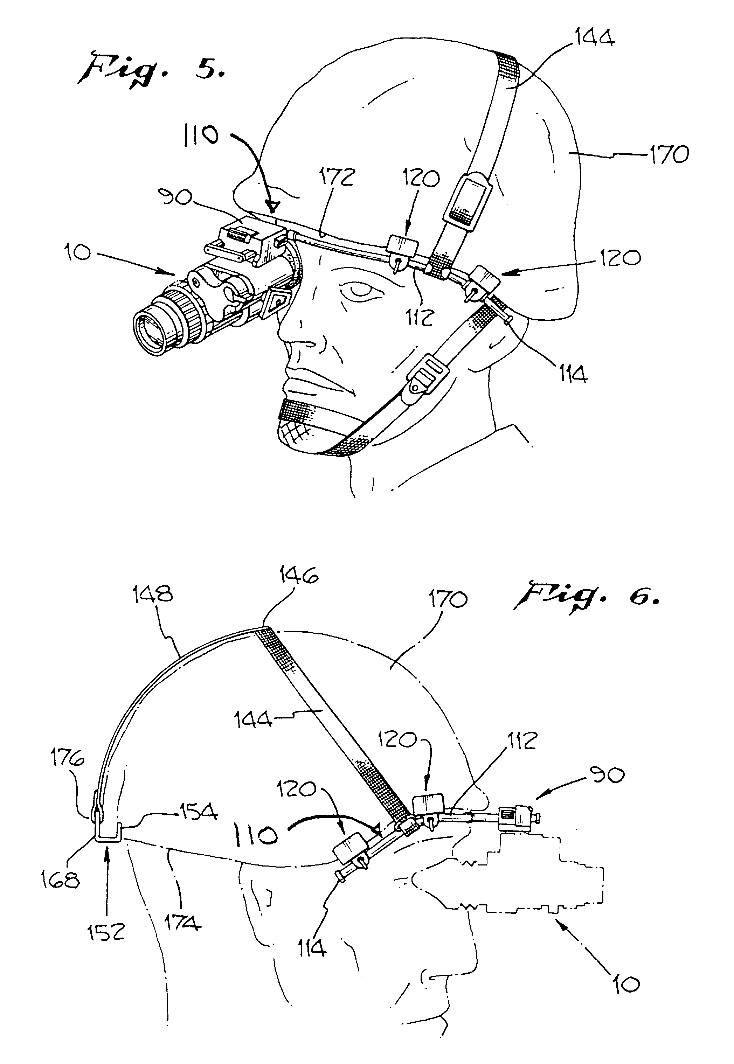

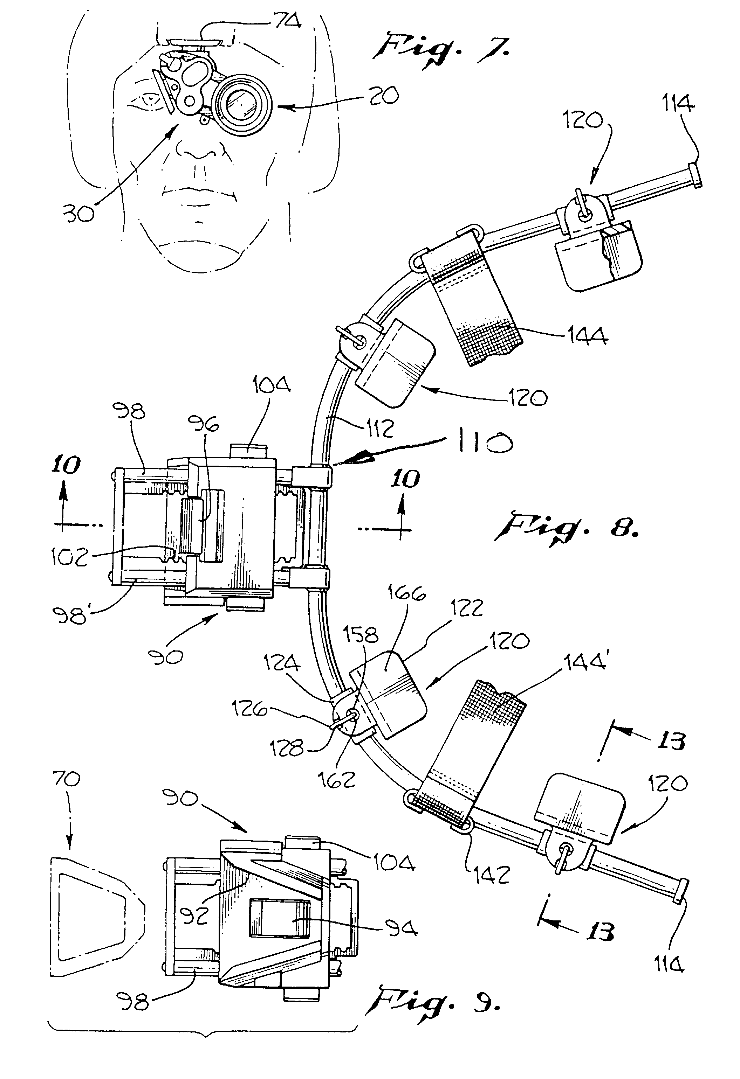

Dovetail mount 70 is intended to be engaged by carriage 90, shown specifically in Figs. 8 through 11, in association with a helmet mount in Figs. 5 and 6, and in association with a face mask in Figs. 17 and 18. Carriage 90 has an engaging portion 92 which is configured to receive dovetail plate 72. A spring-biased locking member 94 is provided to snap into depression 76 and secure dovetail plate 72 to carriage 90. Release button 96 retracts locking member 94 against its bias to allow the dovetail plate to be removed. The carriage 90 is carried by parallel guide bars 98 and 98'. The facing portions of guide bars 98 have a saw tooth track 102 which allows the carriage 90 to be incrementally positioned in the radial direction relative to the operator's face. Track control buttons 104 are provided on either side of carriage 90 to enable the carriage 90 to be freely manipulated along guide bars 98. When the desired radial position is achieved, the operator will release track control buttons 104 to lock carriage 90 in the desired place.

It should be apparent that an important feature of the embodiments of the present invention is the use of two dovetail mounts 70. Since either of the dovetail mounts 70 can engage carriage 90, monocular 10 can be positioned for use by either the right eye, as shown by Fig. 5, or the left eye, as shown by Fig. 7. To change the monocular 10 from one eye to the next, the operator pushes release button 96 with one hand, and with the other hand withdraws dovetail plate 72 from carriage 90. With a single fluid motion, the operator rotates the entire monocular 10 through an arc equivalent to 60°. The operator then inserts the other dovetail plate 72 back into carriage 90 to the locking position. Minor adjustments to eyepiece 12 and to focus rings 16 and 18 can now be done to optimize monocular 10 for use with the new eye. No matter which of the two dovetail mounts 70 are used, rotary switch 56 always remains centered above the operator's nose. Those skilled in the art would appreciate that the monocular 10 can be easily utilized in either a left or a right configuration, and that switching between the two positions can occur readily and accurately.

To further improve the operability of the monocular 10, helmet mount 110 is provided, as shown in Figs. 5, 6 and 8. Helmet mount 110 comprises a generally C-shaped frame, having attachment points at the center portion for guide bars 98 and 98'. The curvature of frame 112 is intended to mimic that of the standard ballistic helmet 170 which is currently in use by United States Armed Forces. When mounted in place, frame 112 follows along the visor edge 172 of helmet 170. The frame 112 comprises a substantially hollow tube which is bent into the desired shape by known machining methods. The ends of the tube are sealed by end caps 114. The frame 112 is made of lightweight metallic material, such as aluminium, and is also provided with a black oxide coating.

To hold the helmet mount 110 to the ballistic helmet 170, four retainer cushions 120 and head strap 140 are provided. The retainer cushions are shown in greater detail in Fig. 13, and comprise a retaining clip 122, a sleeve grip 124, and a pin 126. The sleeve grip 124 is generally C-shaped and frictionally attaches onto frame 112, such that it can be slid along frame 112 to a desired spot. Sleeve grip 124 has an exterior flattened portion 116 which is opposite to open portion 118 which engages frame 112. The retaining clip 122 is generally U-shaped, having a pair of parallel walls 166 and 166' forming an open portion of a thickness adequate to engage the visor edge 172 of standard helmet 170, as shown in Figs. 5 and 13. Parallel tail portions 156 and 156' extend in a direction opposite to that of parallel walls 166 and 166' and features a pair of guide holes 158 and notches 164. A pair of half-moon posts 162 extend radially from the sides of sleeve grip 124, as shown in Figs. 8 and 13. These half-moon posts 162 mate with guide holes 158 providing a pivot point for retaining clips 122. Pivotal travel of retaining clips 122 is limited by contact between the clips and the flattened portion 116. C-shaped pin 126 enters both guide holes 158 from a direction opposite that of half moon posts 162, and extending into the portion above and not occupied by half-moon posts 162. Guide notches 164 are provided in the ends of each of tail portions 156 to engage the pin 126 in a manner which is flush with the bottom of tail portions 156.

The novel retainer cushions 120 firmly grip frame 112, yet can be moved to alternative positions quite easily if readjustment is necessary. The operator would space the four retainer cushions evenly along frame 112 to engage visor 172 of the helmet 170. Since the retainer cushions 120 are easily manipulatable along frame 112, an operator can optimally position the cushions to ensure that frame 112 is snug.

A pair of strap clips 142 and 142' are provided on frame 112 in positions intermediate to the outermost tube of retainer cushions 120. The clips 142 are formed from elongated wire loops with the ends folded inward, and the center portions welded to frame 112. Side straps 144 and 144' engage strap clips 142 and 142' at each of the left and right hand positions. The side straps 144 extend upward along the surface of the helmet to a center joint position 146, where the side straps join with rear strap 148. As shown in Figs. 5 and 6, rear strap 148 extends backward along the back of the helmet, through slot 176 of hook 152 and loops back along itself. The helmet hook 152 is substantially J-shaped and has an elongated back wall 168. Slot 176 spans the width of back wall 168, and is engaged by rear strap 148 as described above. There is a hook wall 154 with a bevelled edge which catches the rear edge 174 of helmet 170. By pulling rear strap 148 snug with helmet hook 152 engaging the rear edge 174 of the helmet 170, helmet mount 110 firmly attaches to helmet 170. Rear strap 148 is then fixed in place by a known securing method, such as Velcro. Other securing methods such as pins, clips or buttons could also be utilized.

It should be apparent that frame 112, when installed using retainer cushions 120 and head strap 140, would provide a stable platform for the installation of monocular 10. Since frame 112 is affixed to the helmet, and not the operator's face, when the helmet is removed from the operator's head, the frame goes with it. If the operator chooses to use the monocular 10 without wearing the helmet, he can do so by holding the monocular 10 in place with his hand. It should also be apparent that when the operator puts the helmet on his head, there is no need for additional adjustment of frame 112.

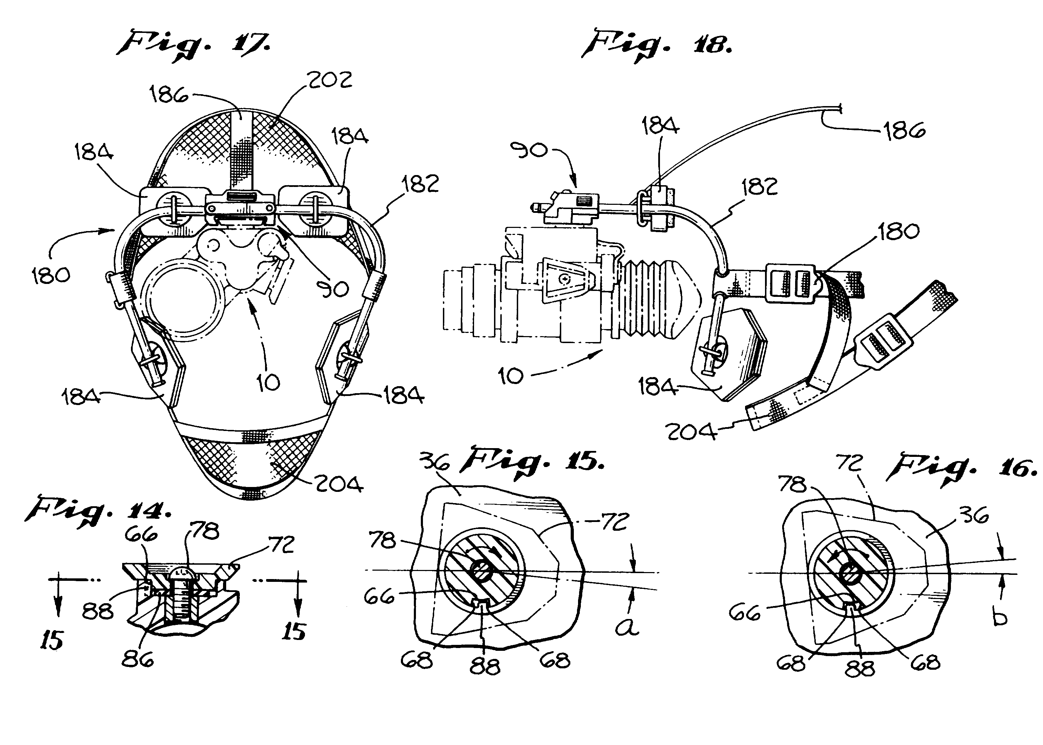

To make incremental azimuth adjustments to the direction of the monocular 10, it is not necessary to readjust helmet mount 110. Instead, dovetail mounts 70 are rotationally adjustable. Referring to Figs. 14 through 16, an O-ring gasket 86 is provided below each of dovetail plates 72. Tab 66 is provided in each of mounting surfaces 36 and 38, which is adjacently positioned to engage dovetail slot 88 disposed underneath dovetail plate 72. By rotation of dovetail plate 72 along the axis formed by mounting screw 78, dovetail tab 66 travels in slot 88. As tab 66 reaches the outer ends of slot 88, additional rotational travel of plate 72 is prevented. Thus, the ends of slot 88 provide limit stops 68 to limit the rotational travel of plate 72. In monocular 10, the range of travel within the slot is 8°, as designated by angles a and b of Figs. 15 and 16, respectively. It should be apparent that an operator can precisely rotate monocular 10 relative carriage 90 to precisely position the axis of optics portion 20 with the operator's eye. It should be further apparent that once this position is achieved, the monocular 10 will remain in this optimal position due to the friction caused by the compression of O-ring gasket 86.

It is further anticipated that the monocular 10 be utilized with face mask 180, as shown in Figs. 17 and 18. The face mask 180 is well known in the art, and has a face mask frame 182 which partially surrounds the operator's face and a plurality of mask plates 184 which press against specific points on the operator's face. The mask 180 is held to the operator's head by use of head strap 186, scull cap 202 and chin strap 204. The face mask 180 is adapted to utilize a carriage 90 identical to that described above in association with helmet mount 110. Since face masks are in such common usage in the art, it is important that monocular 10 and dovetail mounting plates 70 fully compatible with them. Thus, it should be apparent that the night vision monocular 10 of the present invention can be advantageously used with either face mask 180 or helmet mount 110.

It should be apparent that carriage 90 can be adapted to other fixed external support points to increase the range of usage of monocular 10. For example, carriage 90 can be adapted to be fixed to the upper portion of a weapon such as a rifle. The monocular 10 can then be adapted for use with the rifle by the cooperation of dovetail mount 70 with the carriage 90. Since the operator can use the same night vision scope as a pocketscope, as helmet or face mask mounted, or as mounted to a weapon, it should be apparent that the flexibility of the night vision system is greatly enhanced. The operator need only carry the single night vision 10 to satisfy each of his needs, rather than utilizing dedicated night vision systems for each of these usages.

To activate the monocular 10, the operator uses rotary switch 56. Rotary switch 56 has three fixed positions, and a fourth pulsed position. The first fixed position represents power off. This position is used when the monocular 10 is not in use. The second position turns the power on to the monocular 10, but only when the dovetail mount 70 has been engaged within carriage 90. This provides an auto-shutoff feature, so that when the operator removes the monocular 10 from its mount with helmet mount 110 or face mask 180, the monocular automatically turns off. This feature is intended to conserve battery power.

The third fixed position of rotary switch 56 also turns the power to monocular 10 on. When placed in this position, the auto-shutoff feature is bypassed, and the monocular 10 will remain powered on even after removal from carriage 90.

The fourth pulsed position of rotary switch 56 controls the IR illumination. Infra-red emitting diode 54 can shine a cone of infra-red light to illuminate objects within the field of view of monocular 10. The IR diode 54 is utilized when the ambient light is extremely low. Since other potentially hostile operators utilizing night vision systems can also see the light emanating from the IR diode 54, the operator would only pulse the light on for a brief period of time. The rotary switch 56 has an internal spring bias to return the switch from the fourth to the third position. The rotary switch 56 can be an off-the-shelf item, such as the five position F036 switch manufactured by I.T.W. Corporation. An operator must hold the switch into the fourth position for it to remain on. Once the operator lets go of the switch 54, it will return to the third fixed position. This novel use of a spring-biased rotary switch provides an additional margin of safety for the operator.

It is further anticipated that the operator be provided with reliable information showing the operating status of the night vision system. To further ensure that the operator is aware that the IR emitting diode 54 is being utilized, an indicator light is provided inside optics portion 20, as shown generally at 190 of Fig. 12. The indicator light 190 also informs the operator that the internal battery power is running low. Indicator light 190 comprises a first light-emitting diode (LED) 192 and a second LED 194. The LED's are combined on a strip of mylar tape 196 which emerges through the passageway 188 provided between control housing 30 and optics portion 20. The tape 196 is mounted within optics portion 20 parallel to the image viewed through the eyepiece 12, and outside the circumference of the image. In the preferred embodiment of the present invention, first LED 192 is red, and second LED 194 is yellow. The red LED 192 is illuminated when the IR emitting diode 54 is being utilized. The yellow LED 192 is illuminated when the battery power has dropped below a minimum amount. The operator would see either the red LED 192, the yellow LED 194, or both LED's when looking in the eyepiece 12 of monocular 10. Thus, it should be clear that the operator can tell the status of monocular 10 while observing through eyepiece 12 and without removing monocular 10 from attachment with carriage 90.

Having thus described a preferred embodiment of a night vision monocular system it should be appreciated by those skilled in the art that various modifications, adaptations, and alternative embodiments thereof may be made. For example, control housing 340 could be formed of alternative shapes, such as rectangular, and could have more or less than three internal chambers. The dovetail plates 70 also could be formed of alternative shapes, such as triangular or rectangular, so long as the carriage 90 which receives each of dovetail plates 70 has a corresponding shape. The frame 112 for mounting monocular 10 to a ballistic helmet 170 could be shaped to be mounted to other helmets, such as an aviator or policeman's helmet.

## Claims

1. A night vision arrangement comprising a monocular optical portion (20) for receiving and intensifying an image and first and second mount means (74, 72), the first and second mount means being orientated so that they can be selectively engaged by a mounting member (90) to provide two alternative positions for the optical portion in front of respective ones of an operator's eyes.

2. A night vision arrangement comprising an optical portion (20) for receiving and intensifying an image, supporting means (110) on which the optical portion can be releasably mounted, a mounting member (90) attached to one of the optical portion and the supporting means, and first and second mount means (74, 72) on the other of the optical portion and the supporting means, the first and second mount means being orientated so that they can be selectively engaged by the mounting member (90) to provide two alternative positions (110, 180) for the optical portion in front of respective ones of an operator's eyes.

3. A night vision arrangement according to claim 1 or 2 wherein both the first and second mount means are carried by the optical portion.

4. A night vision arrangement according to claim 1,2 or 3, wherein the optical portion (20) has an objective lens (14), an eyepiece (2) and an image intensification means between the objective lens and the eyepiece for intensifying a received image.

5. A night vision arrangement according to any one of the preceding claims, comprising a control housing (30) affixed to the optical portion (20) and having internal circuitry for powering the optical portion.

6. A night vision arrangement according to claim 5, wherein the internal circuitry is battery operable.

7. A night vision arrangement according to claim 5 or 6, comprising means (106) for introducing an inert gas into the control housing (30) to prevent contamination of the internal circuitry.

8. A night vision arrangement according to claim 5, 6 or 7, wherein the control housing (30) comprises an attachment flange (32) which connects to the optical portion and an internal passageway (188) for routing of electrical wiring between the control housing and the optical portion.

9. A night vision arrangement according to any one of claims 5 to 8, wherein the control housing (30) is generally triangular with rounded edges and is of a size and weight conductive to grasping with an operator's single hand for the use of the optical portion as a pocketscope.

10. A night vision arrangement according to any one of the preceding claims, wherein the first and second mount means are respective dovetail mounting means.

11. A night vision arrangement according to claims 3 and 10 or to any one of claims 4 to 9 when appended to claims 3 and 10, wherein the first mount means (74) comprises a first dovetail mounting plate (72) attached to a first surface fixed relative to the optical portion and the second mounting means comprises a second dovetail mounting plate (74) attached to a second surface fixed relative to the optical portion.

12. A night vision arrangement according to claim 11 when appended to claim 5, wherein the first and second surfaces are surfaces of the control housing (30).

13. A night vision arrangement according to claim 10 or 11, wherein the mounting member comprises a carriage (90) configured to receive either of the dovetail plates and means (94) for securing the selected dovetail plate within the carriage.

14. A night vision arrangement according to claim 13, wherein each of the dovetail mounting plates (72, 74) has a generally trapezoidal shape, and the carriage (90) has a receiving portion having a shape corresponding to that of the dovetail mounting plates.

15. A night vision arrangement according to any one of claims 11 to 14, having means (70) for adjusting the azimuth of the optical portion relative to the operator's eye, the means for adjusting comprising a tab (66) disposed in each of the first surface and the second surface, an arcuate slot (88) in the underside of each of the mounting plates (72, 74) and engaging the tabs, and an 0-ring (86) positioned between a corresponding one of the surfaces and the dovetail mounting plates, the mounting plates being rotatable along an arc of travel relative the surfaces with the ends of the slots providing rotation limit stops.

16. A night vision arrangement according to any one of the preceding claims and comprising means (56) for shutting off electrical power to the optical portion upon removal of the optical portion (20) from engagement with the mounting member (90).

17. A night vision arrangement according to claim 2 or to any one of claims 3 to 16 when appended to claim 2, wherein the supporting means (110) comprises a substantially hollow metallic tube (112) having sealed ends and a black oxide finish.

18. A night vision arrangement according to claim 17 wherein the mounting member (90) is selectively adjustable relative the supporting means (110) to vary the distance between the operator and the eyepiece (2).

19. A night vision arrangement according to claim 13 or 14 or to any one of claims 15 to 18 when appended to claim 13, wherein the supporting means (110) carries the carriage (90) in a central portion of the supporting means.

20. A night vision arrangement according to claim 19, wherein the supporting means (110) has a pair of parallel support bars (98, 981) extending outwardly relative to the operator from the center portion of the supporting means, each of the bars having a sawtooth track (102) disposed thereon whereby the carriage (90) travels on the support bars and cooperates with the track to remain secured in a desired position.

21. A night vision arrangement according to claim 2 or to any one of claims 3 to 20 when appended to claim 2, wherein the supporting means conforms to the shape of a visor of a helmet, the arrangement comprising means (120) for attaching the supporting means (110) to the helmet.

22. A night vision arrangement according to claim 21, wherein the attaching means (120) comprises a plurality of adjustable cushions frictionally mounted on the supporting means and engaging the visor, an adjustable strap (144) having a left and right portion, attaching to the supporting means at left and right attachment points respectively, a rear portion (148) joining to the left and right portions relative to the top of the helmet and a hook (152) provided at the end of the rear portion to engage the back of the helmet.

23. A night vision arrangement according to claim 22, wherein each of the adjustable cushions (120) comprises a sleeve portion (124) gripping the supporting means (110), a retaining portion (122) pivoting from the sleeve portion and engaging the visor, and a pin (126) securing the retaining portion to the sleeve portion.

24. A night vision arrangement according claim 23, wherein the sleeve portions (124) are generally C-shaped having an internal surface which conforms to and frictionally engages the supporting means (110), an exterior surface having a substantially flat portion (116) and a pair of half-moon shaped posts (162) protruding outwardly from the exterior surface on opposite sides of the flat portion.

25. A night vision arrangement according to claim 23 or 24, wherein the retaining portions (122) comprise a pair of retaining walls (166, 166') joined by a substantially flat base and a pair of semicircular tabs (156, 1561) extending below the base substantially parallel to the walls, the tabs each having an opening (158) in the center and a notch (164) at the bottom, the posts engaging the openings enabling the retaining portions to pivot relative the sleeve portions (124) with pivotal travel limited by contact between the base and the flat portion of the sleeve portions.

26. A night vision arrangement according to claim 25, wherein the pin (126) is generally C-shaped, having ends which extend outwardly from the part of the openings left unoccupied by the half-moon posts (162), travelling downward along the tab (156, 156¹) to engage the notches (164).

27. A night vision arrangement according to any one of claims 22 to 26, wherein the left and right attachment points (142) comprise elongated wire loops having ends folded inward and an intermediate portion welded to the supporting means (110), the left and right straps having ends which wrap around the supporting means (110) and wire loop combinations with the folded ends enveloping the sides of the straps to preclude lateral movement of the straps relative the supporting means (110).

28. A night vision arrangement according any one of claims 22 to 27, wherein the hook (152) is substantially J-shaped having an elongated back wall (168), a slot (176) spanning the back wall, a hook wall (154) having a bevelled edge, and a base joining the back wall and the hook wall, the rear portion of the strap feeding through the slot and fastening to itself along the length of the rear portion.

29. A night vision arrangement according to claim 2, or to any one of claims 3 to 20 when appended to claim 2, wherein the supporting means (110) is a face mask (180).

30. A night vision arrangement according to claim 29, wherein the supporting means (110) is arranged to partially surround the operator's face and comprises a plurality of mask plates (184) carried by the supporting means (110) and pressing against specific points of the operator's face and a strap (186) affixed to the supporting means (110) at a plurality of points and wrapping around the operator's head, whereby the mask can be firmly affixed to the operator's head by the intentional tightening of the strap.

31. A night vision arrangement according to any one of the preceding claims, comprising an illuminator means (54) for momentarily illuminating the field of view of the optical portion with infra-red light and a switch (50), spring biased to the "off" position, for energizing the illuminator means.

32. A night vision arrangement according to claim 31 when appended to claim 5, wherein the illuminator means (54) comprises an infra-red emitting diode mounted on a forward surface of the control housing (30) and the spring biased switch (50) is mounted on the control housing and is electrically connected to the diode to energize the diode only by the intentional manipulation of the switch against its bias, the switch returning to a position de-energizing the diode upon release of the switch.

33. A night vision arrangement according to claim 32, comprising an indicator means (192) for indicating to the operator that the illuminator means (54) is energized.

34. A night vision arrangement according to claim 6 or to any one of claims 7 to 33 when appended to claim 6, comprising means (194) for indicating to the operator that the battery has dropped below a minimum power.

35. A night vision arrangement according to claim 33 or 34, wherein the or at least one indicating means (192, 194) comprises a light-emitting diode (LED).

36. A night vision arrangement according to any one of claims 33 to 34 wherein the or at least one indicator means is visible through the optical portion.

37. A night vision arrangement according to any one of claims 33 to 36 comprising means (196) for mounting the or at least one indicating means on an interior portion of the optical portion.

38. A night vision arrangement according to claim 37 wherein the mounting means comprises a substantially flexible mylar tape.

## Patentansprüche

1. Nachtsichteinrichtung, umfassend einen monokularen optischen Abschnitt (20) zum Empfangen und Verstärken eines Bilds und erste und zweite Befestigungsvorrichtungen (74, 72), wobei die ersten und zweiten Befestigungsvorrichtungen so gerichtet sind, daß ein Montageglied (90) wahlweise in sie eingreifen kann, um zwei alternative Stellungen für den optischen Abschnitt vor jeweils einem Auge eines Bedieners bereitzustellen.

2. Nachtsichteinrichtung, umfassend einen optischen Abschnitt (20) zum Empfangen und Verstärken eines Bilds, eine Haltevorrichtung (110), auf der der optische Abschnitt lösbar befestigt werden kann, ein Montageglied (90), das an einem der beiden Teile - dem optischen Abschnitt und der Haltevorrichtung - befestigt ist, und erste und zweite Befestigungsvorrichtungen (74, 72), die am anderen der beiden Teile - dem optischen Abschnitt und der Haltevorrichtung - befestigt sind, wobei die ersten und zweiten Befestigungsvorrichtungen so gerichtet sind, daß das Montageglied (90) wahlweise in sie eingreifen kann, um zwei alternative Stellungen (110, 180) für den optischen Abschnitt vor jeweils einem Auge einer Bedienperson bereitzustellen.

3. Nachtsichteinrichtung nach Anspruch 1 oder 2, wobei der optische Abschnitt sowohl die erste Befestigungsvorrichtung als auch die zweite Befestigungsvorrichtung trägt.

4. Nachtsichteinrichtung nach Anspruch 1, 2 oder 3, wobei der optische Abschnitt (20) eine Objektivlinse (14), ein Okular (2) und eine Bildverstärkervorrichtung zwischen der Objektivlinse und dem Okular aufweist, um mit der Bildverstärkervorrichtung ein empfangenes Bild zu verstärken.

5. Nachtsichteinrichtung nach irgendeinem der vorhergehenden Ansprüche, umfassend ein Steuergehäuse (30), das am optischen Abschnitt (20) befestigt ist und eine interne Schaltung aufweist, die den optischen Abschnitt mit Energie versorgt.

6. Nachtsichteinrichtung nach Anspruch 5, wobei die interne Schaltung aus einer Batterie betrieben werden kann.

7. Nachtsichteinrichtung nach Anspruch 5 oder 6, umfassend eine Vorrichtung (106) zum Einfüllen von Inertgas in das Steuergehäuse (30), damit eine Verschmutzung der internen Schaltung verhindert wird.

8. Nachtsichteinrichtung nach Anspruch 5, 6 oder 7, wobei das Steuergehäuse (30) einen Befestigungsflansch (32) umfaßt, der mit dem optischen Abschnitt verbunden ist, und einen inneren Durchgang (188) zum Führen einer elektrischen Verdrahtung zwischen dem Steuergehäuse und dem optischen Abschnitt.

9. Nachtsichteinrichtung nach irgendeinem der Ansprüche 5 bis 8, wobei das Steuergehäuse (30) im wesentlichen dreieckig mit verrundeten Kanten ist und eine geeignete Größe und ein Gewicht hat, so daß ein Bediener zum Gebrauch des optischen Abschnitts als Taschensichtgerät mit einer Hand zugreifen kann.

10. Nachtsichteinrichtung nach irgendeinem der vorhergehenden Ansprüche, wobei die ersten und zweiten Befestigungsvorrichtungen jeweils Schwalbenschwanz-Befestigungsvorrichtungen sind.

11. Nachtsichteinrichtung nach Anspruch 3 und 10 oder irgendeinem der Ansprüche 4 bis 9 wenn abhängig von den Ansprüchen 3 und 10, wobei die erste Befestigungsvorrichtung (74) eine erste Schwalbenschwanz-Montageplatte (72) umfaßt, die an einer ersten Fläche angebracht ist, die relativ zum optischen Abschnitt fest ist, und die zweite Befestigungsvorrichtung eine zweite Schwalbenschwanz-Montageplatte (74) umfaßt, die an einer zweiten Fläche angebracht ist, die relativ zum optischen Abschnitt fest ist.

12. Nachtsichteinrichtung nach Anspruch 11 wenn abhängig von Anspruch 5, wobei die ersten und zweiten Flächen Oberflächen des Steuergehäuses (30) sind.

13. Nachtsichteinrichtung nach Anspruch 10 oder 11, wobei die Befestigungsvorrichtung einen Schlitten (90) umfaßt, der so eingerichtet ist, daß er eine der beiden Schwalbenschwanzplatten aufnimmt, und eine Vorrichtung (94) zum Befestigen der gewählten Schwalbenschwanzplatte im Schlitten.

14. Nachtsichteinrichtung nach Anspruch 13, wobei jede der Schwalbenschwanz-Montageplatten (72, 74) im allgemeinen trapezförmig ist und der Schlitten (90) einen Aufnahmeabschnitt aufweist, dessen Gestalt der Form der Schwalbenschwanz-Montageplatten entspricht.

15. Nachtsichteinrichtung nach irgendeinem der Ansprüche 11 bis 14, umfassend eine Vorrichtung (70) zum Einstellen des Azimuts des optischen Abschnitts relativ zum Auge des Bedieners, wobei die Einstellvorrichtung eine Nase (66) umfaßt, die jeweils in der ersten Fläche und in der zweiten Fläche angebracht ist, einen gekrümmten Schlitz (88) in der Unterseite einer jeden Montageplatte (72, 74), der in die Nasen eingreift, und einen O-Ring (86), der zwischen einer entsprechenden Fläche und den Schwalbenschwanz-Montageplatten angeordnet ist, und die Montageplatten entlang eines Bewegungswinkels relativ zu den Flächen drehbar sind, und die Schlitzenden Anschläge zum Begrenzen der Drehung bilden.

16. Nachtsichteinrichtung nach irgendeinem der vorhergehenden Ansprüche, umfassend eine Vorrichtung (56) zum Abtrennen der elektrischen Energieversorgung vom optischen Abschnitt, wenn der optische Abschnitt (20) aus dem Eingriff in das Montageglied (90) gelöst wird.

17. Nachtsichteinrichtung nach Anspruch 2 oder irgendeinem der Ansprüche 3 bis 16 wenn abhängig von Anspruch 2, wobei die Haltevorrichtung (110) ein im wesentliches hohles Metallrohr (112) umfaßt, das abgedichtete Enden aufweist und eine schwarze Oxidoberfläche.

18. Nachtsichteinrichtung nach Anspruch 17, wobei das Montageglied (90) relativ zur Haltevorrichtung (110) ausgewählt einstellbar ist, um den Abstand zwischen der Bedienperson und dem Okular (2) zu verändern.

19. Nachtsichteinrichtung nach Anspruch 13 oder 14 oder irgendeinem der Ansprüche 15 bis 18 wenn abhängig von Anspruch 13, wobei die Haltevorrichtung (110) den Schlitten (90) in einem Mittenabschnitt der Haltevorrichtung trägt.

20. Nachtsichteinrichtung nach Anspruch 19, wobei die Haltevorrichtung (110) ein Paar parallele Haltestäbe (98, 98') aufweist, die relativ zur Bedienperson vom Mittenabschnitt der Haltevorrichtung nach außen verlaufen, und jeder Stab eine auf dem Stab angebrachte Säge zahnschiene (102) hat, auf der sich der Schlitten (90) auf den Haltestäben bewegt und mit der Schiene zusammenwirkt, um in einer gewünschten Stellung gehalten zu bleiben.

21. Nachtsichteinrichtung nach Anspruch 2 oder irgendeinem der Ansprüche 3 bis 20 wenn abhängig von Anspruch 2, wobei die Haltevorrichtung genauso geformt ist wie das Visier eines Helms, und die Anordnung eine Vorrichtung (120) zum Befestigen der Haltevorrichtung (110) am Helm enthält.

22. Nachtsichteinrichtung nach Anspruch 21, wobei die Befestigungsvorrichtung (120) umfaßt:
eine Anzahl einstellbarer Polster, die reibschlüssig auf der Haltevorrichtung montiert sind und in das Visier eingreifen,
einen einstellbaren Riemen (144) mit einem linken und einem rechten Abschnitt, wobei die Riemenabschnitte an der Haltevorrichtung an linken bzw. rechten Befestigungspunkten angebracht sind,
einen hinteren Abschnitt (148), der die linken und rechten Abschnitte auf dem obersten Helmteil verbindet, und
einen Haken (152), der am Ende des hinteren Abschnitts bereitgestellt ist und in das rückwärtige Helmteil eingreift.

23. Nachtsichteinrichtung nach Anspruch 22, wobei jedes der einstellbaren Polster (120) einen Hülsenabschnitt (124) enthält, der in die Haltevorrichtung (110) eingreift, einen Halteabschnitt (122), der gegen den Hülsenabschnitt schwenkbar ist und in das Visier eingreift, und einen Stift (126), der den Halteabschnitt am Hülsenabschnitt befestigt.

24. Nachtsichteinrichtung nach Anspruch 23, wobei die Hülsenabschnitte (124) im allgemeinen C-förmig sind und eine Innenfläche haben, die der Haltevorrichtung (110) angeformt ist und reibschlüssig in sie eingreift, eine Außenfläche, die einen im wesentlichen flachen Abschnitt (116) aufweist und ein Paar halbmondförmiger Stützen (162), die von der Außenfläche an entgegengesetzten Seiten des flachen Abschnitts nach außen vorstehen.

25. Nachtsichteinrichtung nach Anspruch 23 oder 24, wobei die Halteabschnitte (122) ein Paar Haltewände (166, 166') umfassen, die von einer im wesentlichen flachen Basis verbunden sind, und ein Paar halbkreisförmiger Spitzen (156, 156'), die unter der Basis im wesentlichen parallel zu den Wänden verlaufen, und die Spitzen jeweils eine Öffnung (158) in der Mitte haben und eine Kerbe (164) am Unterteil, und die Stützen in die Öffnungen eingreifen und es den Halteabschnitten ermöglichen, sich relativ zu den Hülsenabschnitten (124) zu drehen, wobei das Ausmaß der Drehung durch die Berührung zwischen der Basis und dem flachen Abschnitt der Hülsenabschnitte begrenzt ist.

26. Nachtsichteinrichtung nach Anspruch 25, wobei der Stift (126) im allgemeinen C-förmig ist und Enden aufweist, die vom Teil der Öffnungen nach außen vorstehen, die die halbmondförmigen Stützen (162) nicht einnehmen, und entlang der Spitzen (156, 156') nach unten verlaufen, um in die Kerben (164) einzugreifen.

27. Nachtsichteinrichtung nach irgendeinem der Ansprüche 22 bis 26, wobei
die linken und rechten Befestigungspunkte (142) längliche Drahtschleifen umfassen, deren Enden nach innen umgebogen sind, und einen Mittenabschnitt, der an die Haltevorrichtung (110) geschweißt ist,
die rechten und linken Riemen Enden haben, die um die Verbindungen aus Drahtschleife und Haltevorrichtung (110) gewickelt sind, und
die umgebogenen Enden die Riemenseiten umschließen, damit eine Seitenbewegung der Riemen relativ zur Haltevorrichtung (110) verhindert wird.

28. Nachtsichteinrichtung nach irgendeinem der Ansprüche 22 bis 27, in der der Haken (152) im wesentlichen J-förmig ist und aufweist:
eine längliche Rückwand (168),
einen Schlitz (176), der sich über die Rückwand erstreckt,
eine Hakenwand (154) mit einer schrägen Kante, und
eine Basis, die die Rückwand und die Hakenwand verbindet, wobei der rückwärtige Riemenabschnitt durch den Schlitz geführt und entlang des rückwärtigen Abschnitts an sich selbst befestigt ist.

29. Nachtsichteinrichtung nach Anspruch 2 oder irgendeinem der Ansprüche 3 bis 20 wenn abhängig von Anspruch 2, wobei die Haltevorrichtung (110) eine Gesichtsmaske (180) ist.

30. Nachtsichteinrichtung nach Anspruch 29, in der die Haltevorrichtung (110) so eingerichtet ist, daß sie das Gesicht der Bedienperson teilweise umgibt und enthält:
eine Anzahl Maskenplatten (184), die die Haltevorrichtung (110) trägt und die auf besondere Punkte des Gesichts der Bedienperson drücken, und
einen Riemen (186), der an einer Anzahl Punkte an der Haltevorrichtung (110) befestigt und um den Kopf der Bedienperson geschlungen ist, wobei die Maske durch das absichtliche Anziehen des Riemens fest am Kopf der Bedienperson befestigt werden kann.

31. Nachtsichteinrichtung nach irgendeinem der vorhergehenden Ansprüche, umfassend eine Beleuchtungsvorrichtung (54) zum kurzzeitigen Beleuchten des Sichtfelds des optischen Abschnitts mit Infrarotlicht, und einen Schalter (50), der von einer Feder in die ausgeschaltete Stellung gedrückt wird, zum Versorgen der Beleuchtungsvorrichtung mit Energie.

32. Nachtsichteinrichtung nach Anspruch 31 wenn abhängig von Anspruch 5, wobei die Beleuchtungsvorrichtung (54) eine Infrarotdiode enthält, die an der Vorderfläche des Steuergehäuses (30) montiert ist, und der federbelastete Schalter (50) am Steuergehäuse montiert und elektrisch mit der Diode verbunden ist, damit die Diode nur dann mit Energie versorgt wird, wenn der Schalter absichtlich gegen seine Vorbelastung gedrückt wird, und der Schalter beim Loslassen des Schalters in eine Stellung zurückkehrt, in der die Diode nicht mit Energie versorgt wird.

33. Nachtsichteinrichtung nach Anspruch 32, umfassend eine Anzeigevorrichtung (192), die der Bedienperson anzeigt, daß die Beleuchtungsvorrichtung (54) eingeschaltet ist.

34. Nachtsichteinrichtung nach Anspruch 6 oder irgendeinem der Ansprüche 7 bis 33 wenn abhängig von Anspruch 6, umfassend eine Vorrichtung (194), die der Bedienperson anzeigt, daß die Batterie weitgehend entleert ist.

35. Nachtsichteinrichtung nach Anspruch 33 oder 34, wobei die Anzeigevorrichtungen (192, 194) eine Leuchtdiode (LED) enthalten oder zumindest eine Anzeigevorrichtung eine Leuchtdiode (LED) enthält.

36. Nachtsichteinrichtung nach irgendeinem der Ansprüche 33 bis 34, wobei die Anzeigevorrichtungen durch den optischen Abschnitt sichtbar sind bzw. mindestens eine Anzeigevorrichtung durch den optischen Abschnitt sichtbar ist.

37. Nachtsichteinrichtung nach irgendeinem der Ansprüche 33 bis 36, umfassend eine Vorrichtung (196) zum Montieren der Anzeigevorrichtungen bzw. der mindestens einen Anzeigevorrichtung an einem inneren Abschnitt des optischen Abschnitts.

38. Nachtsichteinrichtung nach Anspruch 37, wobei die Montagevorrichtung ein im wesentlichen flexibles Mylarband enthält.

## Revendications

1. Dispositif de vision nocturne comportant une partie optique monoculaire (20) destinée à recevoir et renforcer une image et des premier et second moyens de montage (74, 72), les premier et second moyens de montage étant orientés de manière à pouvoir être engagés sélectivement par un élément de montage (90) pour établir deux positions alternatives pour la partie optique devant l'un, respectif, des yeux d'un opérateur.

2. Dispositif de vision nocturne comportant une partie optique (20) destinée à recevoir et renforcer une image, un moyen de support (110) sur lequel la partie optique peut être montée de façon libérable, un élément de montage (90) relié à l'un de la partie optique et du moyen de support, et des premier et second moyens de montage (74, 72) sur l'autre de la partie optique et du moyen de support, les premier et second moyens de montage étant orientés de façon qu'ils puissent être engagés sélectivement par l'élément de montage (90) pour établir deux positions alternatives (110, 180) pour la partie optique devant l'un, respectif, des yeux d'un opérateur.

3. Dispositif de vision nocturne selon la revendication 1 ou 2, dans lequel les premier et second moyens de montage sont portés tous deux par la partie optique.

4. Dispositif de vision nocturne selon la revendication 1, 2 ou 3, dans lequel la partie optique (20) comporte une lentille d'objectif (14), un oculaire (2) et un moyen de renforcement d'image entre la lentille d'objectif et l'oculaire pour renforcer une image reçue.

5. Dispositif de vision nocture selon l'une quelconque des revendications précédentes, comportant un boîtier de commande (30) fixé à la partie optique (20) et ayant un circuit intérieur pour fournir de l'énergie à la partie optique.

6. Dispositif de vision nocturne selon la revendication 5, dans lequel le circuit intérieur fonctionne sur piles.

7. Dispositif de vision nocturne selon la revendication 5 ou 6, comportant un moyen (106) pour introduire un gaz inerte dans le boîtier de commande (30) afin d'empêcher la contamination du circuit intérieur.

8. Dispositif de vision nocturne selon la revendication 5, 6 ou 7, dans lequel le boîtier de commande (30) comporte une patte de fixation (32) qui est reliée à la partie optique et un passage intérieur (188) pour acheminer un câblage électrique entre le boîtier de commande et la partie optique.

9. Dispositif de vision nocturne selon l'une quelconque des revendications 5 à 8, dans lequel le boîtier de commande (30) est globalement triangulaire avec des bords arrondis et est d'une dimension et d'un poids lui permettant d'être saisi d'une seule main par l'opérateur pour que la partie optique soit utilisée à la manière d'une lunette de poche.

10. Dispositif de vision nocturne selon l'une quelconque des revendications précédentes, dans lequel les premier et second moyens de montage sont des moyens de montage respectifs en queue d'aronde.

11. Dispositif de vision nocturne selon les revendications 3 et 10 ou l'une quelconque des revendications 4 à 9 lorsqu'elle est rattachée aux revendications 3 et 10, dans lequel le premier moyen de montage (74) comporte une première plaque de montage (72) à queue d'aronde reliée à une première surface qui est fixe par rapport à la partie optique et le second moyen de montage comporte une seconde plaque de montage (74) à queue d'aronde reliée à une seconde surface qui est fixe par rapport à la partie optique.

12. Dispositif de vision nocturne selon la revendication 11 lorsqu'elle est rattachée à la revendication 5, dans lequel les première et seconde surfaces sont des surfaces du boîtier (30) de commande.

13. Dispositif de vision nocturne selon la revendication 10 ou 11, dans lequel l'élément de montage comporte un chariot (90) configuré pour recevoir l'une des plaques à queue d'aronde et un moyen (94) pour fixer la plaque à queue d'aronde choisie à l'intérieur du chariot.

14. Dispositif de vision nocturne selon la revendication 13, dans lequel chacune des plaques de montage (72, 74) à queue d'aronde présente une forme globalement trapézoïdale, et le chariot (90) comporte une partie de réception ayant une forme correspondant à celle des plaques de montage à queue d'aronde.

15. Dispositif de vision nocturne selon l'une quelconque des revendications 11 à 14, comportant des moyens (70) destinés à régler l'azimuth de la partie optique par rapport à l'oeil de l'opérateur, le moyen de réglage comportant une languette (66) disposée dans chacune de la première surface et de la seconde surface, une rainure courbe (88) dans le côté inférieur de chacune des plaques de montage (72, 74) et en engagement avec les languettes, et une bague torique (86) positionnée entre l'une correspondante des surfaces et les plaques de montage à queue d'aronde, les plaques de montage pouvant tourner le long d'un arc de déplacement par rapport aux surfaces, les extrémités des rainures constituant des butées limitant la rotation.

16. Dispositif de vision nocturne selon l'une quelconque des revendications précédentes et comportant un moyen (56) destiné à couper l'alimentation en énergie électrique de la partie optique lorsque la partie optique (20) est enlevée de l'engagement avec l'élément de montage (90).

17. Dispositif de vision nocture selon la revendication 2 ou l'une quelconque des revendications 3 à 16 lorsqu'elle est rattachée à la revendication 2, dans lequel le moyen de support (110) comporte un tube sensiblement creux et métallique (112) ayant des extrémités obturées et une finition à oxyde noir.

18. Dispositif de vision nocturne selon la revendication 17, dans lequel l'élément de montage (90) peut être réglé sélectivement par rapport au moyen de support (110) pour faire varier la distance entre l'opérateur et l'oculaire (2).

19. Dispositif de vision nocturne selon la revendication 13 ou 14 ou l'une quelconque des revendications 15 à 18 lorsqu'elle est rattachée à la revendication 13, dans lequel le moyen de support (110) porte le chariot (90) dans une partie centrale du moyen de support.

20. Dispositif de vision nocturne selon la revendication 19, dans lequel le moyen de support (110) comporte deux barres parallèles (98, 981) de support s'étendant vers l'extérieur par rapport à l'opérateur depuis la partie centrale du moyen de support, chacune des barres ayant, disposée sur elle, une crémaillère (102) en dents de scie grâce à quoi le chariot (90) se déplace sur les barres de support et coopère avec la crémaillère pour rester fixé dans une position souhaitée.

21. Dispositif de vision nocturne selon la revendication 2 ou l'une quelconque des revendications 3 à 20, lorsqu'elle est rattachée à la revendication 2, dans lequel le moyen de support épouse la forme d'une visière d'un casque, le dispositif comportant un moyen (120) pour attacher le moyen de support (110) au casque.

22. Dispositif de vision nocturne selon la revendication 21, dans lequel le moyen d'attache (120) comporte plusieurs coussinets réglables montés à frottement sur le moyen de support et engageant la visière, une sangle réglagle (144) ayant des parties gauche et droite s'attachant au moyen de support en des points d'attache gauche et droit, respectivement, une partie arrière (148) reliée aux parties gauche et droite par rapport au sommet du casque et un crochet (152) prévu à l'extrémité de la partie arrière pour s'accrocher au côté arrière du casque.

23. Dispositif de vision nocture selon la revendication 22, dans lequel chacun des coussinets réglables (120) comporte une partie à manchon (124) enserrant le moyen de support (110), une partie de retenue (122) pivotant depuis la partie à manchon et engageant la visière, et une broche (126) fixant la partie de retenue à la partie à manchon.

24. Dispositif de vision nocturne selon la revendication 23, dans lequel les parties à manchons (124) ont une forme globalement en C ayant une surface intérieure qui se conforme au moyen de support (110) et établit un contact de frottement avec lui, une surface extérieure ayant une partie sensiblement plate (116) et deux colonnes (162) en forme de demi-lune faisant saillie vers l'extérieur de la surface extérieure sur des côtés opposés de la partie plate.

25. Dispositif de vision nocturne selon la revendication 23 ou 24, dans lequel les parties de retenue (122) comprennent deux parois de retenue (166, 166') reliées par une base sensiblement plate et deux languettes semi-circulaires (156, 1561) s'étendant au-dessous de la base, sensiblement parallèles aux parois, chacune des languettes ayant une ouverture (158) dans le centre et une encoche (164) à la partie inférieure, les colonnes engageant les ouvertures, permettant aux parties de retenue de pivoter par rapport aux parties à manchons (124) avec une course de pivotement limitée par un contact entre la base et la partie plate des parties de manchons.

26. Dispositif de vision nocturne selon la revendication 25, dans lequel la broche (126) est de forme globalement en C, ayant des extrémités qui s'étendent vers l'extérieur depuis la partie des ouvertures laissées inoccupée par les colonnes en demi-lune (162), se déplaçant vers le bas le long de la languette (156, 1561) pour engager les encoches (164).

27. Dispositif de vision nocturne selon l'une quelconque des revendications 22 à 26, dans lequel les points d'attache gauche et droit (142) comprennent des boucles allongées en fil métallique ayant des extrémités pliées vers l'intérieur et une partie intermédiaire soudée au moyen de support (110), les sangles gauche et droite ayant des extrémités qui s'enroulent autour du moyen de support (110) et des combinaisons de boucles en fil métallique avec les extrémités pliées enveloppant les côtés des sangles pour empêcher un mouvement latéral des sangles par rapport au moyen (110) de support.

28. Dispositif de vision nocturne selon l'une quelconque des revendications 22 à 27, dans lequel le crochet (152) est de forme sensiblement en J ayant une paroi arrière allongée (168), une fente (176) s'étendant le long de la paroi arrière, une paroi à crochet (152) ayant un bord biseauté, et une base joignant la paroi arrière et la paroi à crochet, la partie arrière de la sangle passant dans la fente et se fixant à elle-même sur la longueur de la partie arrière.

29. Dispositif de vision nocturne selon la revendication 2 ou l'une quelconque des revendications 3 à 20, lorsqu'elle est rattachée à la revendication 2, dans lequel le moyen de support (110) est un masque facial (180).

30. Dispositif de vision nocturne selon la revendication 29, dans lequel le moyen de support (110) est agencé pour entourer partiellement la face de l'opérateur et comporte plusieurs plaques (184) de masque portées par le moyen de support (110) et s'appuyant sur des parties spécifiques de la face de l'opérateur et une sangle (186) fixée au moyen de support (110) en plusieurs points et entourant la tête de l'opérateur, grâce à quoi le masque peut être fixé fermement à la tête de l'opérateur par le serrage intentionnel de la sangle.

31. Dispositif de vision nocturne selon l'une quelconque des revendications précédentes, comportant un moyen illuminateur (54) pour illuminer momentanément le champ de vision de la partie optique avec de la lumière infrarouge et un interrupteur (50), rappelé par ressort en position "ouverte", pour alimenter en énergie le moyen illuminateur.

32. Dispositif de vision nocturne selon la revendication 31 lorsqu'elle est rattachée à la revendication 5, dans lequel le moyen illuminateur (54) comporte une diode d'émission d'infrarouge montée sur une surface avant du boîtier de commande (30) et l'interrupteur (50) rappelé par ressort est monté sur le boîtier de commande et est connecté électriquement à la diode pour alimenter en énergie la diode uniquement par la manipulation intentionnelle de l'interrupteur contre sa force de rappel, l'interrupteur revenant dans une position coupant l'alimentation en énergie de la diode lorsque l'interrupteur est relâché.

33. Dispositif de vision nocturne selon la revendication 32, comportant un moyen indicateur (192) destiné à indiquer à l'opérateur que le moyen illuminateur (54) est alimenté en énergie.

34. Dispositif de vision nocturne selon la revendication 6 ou l'une quelconque des revendications 7 à 33 lorsqu'elle est rattachée à la revendication 6, comportant un moyen (194) destiné à indiquer à l'opérateur que la pile est descendue au-dessous d'une puissance minimale.

35. Dispositif de vision nocturne selon la revendication 33 ou 34, dans lequel le ou au moins un moyen d'indication (192, 194) comprend une diode lumineuse (DEL).

36. Dispositif de vision nocturne selon l'une quelconque des revendications 33 à 34, dans lequel le ou au moins un moyen indicateur est visible à travers la partie optique.

37. Dispositif de vision nocturne selon l'une quelconque des revendications 33 à 36, comportant un moyen (196) destiné à monter le ou au moins un moyen d'indication sur une partie intérieure de la partie optique.

38. Dispositif de vision nocturne selon la revendication 37, dans lequel le moyen de montage comporte un ruban sensiblement souple en Mylar.
